# EUROPEAN PATENT SPECIFICATION

(11) **EP 4 636 910 B1**
(45) Date of publication and mention of the grant of the patent: **11.11.2026**
(21) Application number: 25170901.0
(22) Date of filing: 16.04.2025
(51) Int. Cl.: H01M 10/647, H01M 50/51, H01M 50/209, H01M 50/507, H01M 50/517, H01M 50/529, H01M 50/557

(54) **CONNECTOR AND SECONDARY BATTERY**
VERBINDER UND SEKUNDÄRBATTERIE
CONNECTEUR ET BATTERIE SECONDAIRE

(30) Priority: 18.04.2024 JP 2024067380
(43) Date of publication of application: 22.10.2025
(73) Proprietor: TOYOTA BOSHOKU KABUSHIKI KAISHA, Kariya-shi, Aichi 448-8651 (JP)
(72) Inventor: SUMIYA, Yoshiaki, Kariya-shi, Aichi 448-8651 (JP)
(74) Representative: TBK

(56) References cited:
- EP-A1- 1 059 682
- EP-A2- 1 798 787
- US-A1- 2015 380 699
- US-A1- 2018 294 448
- US-A1- 2020 020 913

## Description

### Technical Field

The present invention relates to a connector and a secondary battery.

### Background Art

Patent Literature 1 discloses a direct-connection assembled battery configured by stacking multiple battery elements, each having a positive electrode tab and a negative electrode tab that are protruding therefrom, and by connecting the positive electrode tab and the negative electrode tab.

### Citation List

### Patent Literature

Patent Literature 1: JP 2012-256605 A
Patent Literature 2: EP 1 059 682 A1
Patent Literature 3: US 2018/294448 A1

EP 1 059 682 A1 discloses a connector having
a resin frame as a housing the positive and the negative electrode terminal; and
a connecting element as a conductive member that contacts positive and the negative electrode terminal in a state of being accommodated in the housing,
wherein the resin frame housing includes an insulating partition wall that partitions the resin frame housing from another resin frame housing that is adjacent in stacking direction.

US 2018/294448 A1 discloses a housing having a housing main body with a bus bar attaching portion and clip receiving portions. A bus bar having a clip for electrode terminals is arranged and fixed in the bus bar attaching portion, and the clip receiving portions receive the clip.

### Summary of Invention

### Technical Problem

In the stacked state, the positive electrode tabs and the negative electrode tabs are arranged in the stacking direction while being exposed and close to each other, which may cause the short-circuiting of tabs other than proper connection targets.

The present disclosure has been completed based on the above circumstances, and an object of the present disclosure is to prevent a positive electrode tab and a negative electrode tab from contacting a tab that differs from a proper connection target.

### Solution to Problem

The above object is solved by a connector having the features of claim 1.

A secondary battery having such a connector is stated in claim 5. Further developments are stated in the dependent claims.

### Advantageous Effects of Invention

According to the first and second disclosures, it is possible to prevent the positive electrode tab and the negative electrode tab from contacting a tab that differs from a proper connection target.

### Brief Description of Drawings

Fig. 1 is a perspective view of a stacked state of a secondary battery according to a first embodiment, as viewed from the diagonally front-right.
Fig. 2 is a perspective view of a stacking step of the secondary battery, as viewed from the diagonally front-right.
Fig. 3 is a perspective view of a disassembled state of a first support member, a battery cell, and a connector, as viewed from the diagonally front-right.
Fig. 4 is a perspective view of a disassembled state of a second support member, a battery cell, and a connector, as viewed from the diagonally front-right.
Fig. 5 is a perspective view of a positive electrode cap in a vertically inverted state.
Fig. 6 is a perspective view of a negative electrode cap in a vertically inverted state.
Fig. 7 is a partially enlarged side-sectional view illustrating the stacked state of the secondary battery.
Fig. 8 is a perspective view of a stacked state of a secondary battery according to a second embodiment, as viewed from the diagonally front-right.
Fig. 9 is a perspective view of a stacking step of the secondary battery, as viewed from the diagonally front-right.
Fig. 10 is a perspective view of a disassembled state of a battery cell with a positive electrode tab located on the right side and a negative electrode tab located on the left side, a support member, and a connector, as viewed from the diagonally front-right.
Fig. 11 is a perspective view of a disassembled state of the battery cell with the positive electrode tab located on the left side and the negative electrode tab located on the right side, the support member, and the connector, as viewed from the diagonally front-right.
Fig. 12 is a partially enlarged side-sectional view illustrating the stacked state of the secondary battery.
Fig. 13 is a partially enlarged side-sectional view illustrating a stacked state of a secondary battery according to a third embodiment.
Fig. 14 is an enlarged positive cross-sectional view of the connector in a state where a positive electrode tab, a negative electrode tab, and a conductive member are accommodated.
Fig. 15 is a perspective view of a housing, as viewed from the diagonally rear-right.

### Description of Embodiments

Desirable embodiments of the present disclosure will now be described. Any combination of a plurality of embodiments below within a range not causing inconsistency is also included in the embodiments for carrying out the invention.
(1) A connector according to a first disclosure is a connector that is attached to a secondary battery formed by stacking multiple battery cells, each having a flat shape and including a positive electrode tab and a negative electrode tab that are protruding from an outer peripheral edge thereof, and is configured to connect in series the positive electrode tab and the negative electrode tab adjacent to each other in a stacking direction of the battery cells. The connector includes: a housing that accommodates the positive electrode tab and the negative electrode tab that are connection targets; and a conductive member that contacts the positive electrode tab and the negative electrode tab in a state of being accommodated in the housing. The housing includes an insulating partition wall that partitions the housing from another said housing that is adjacent in the stacking direction. With this configuration, the positive electrode tab and the negative electrode tab are connected in series via the conductive member in one housing. Since the insulating partition wall is interposed between two housings adjacent in the stacking direction, it is possible to prevent the positive electrode tab and the negative electrode tab from contacting a tab that differs from a proper connection target.
(2) In (1), preferably, the housing is capable of surrounding at least one of the positive electrode tab and the negative electrode tab in a state where the battery cells are not stacked. With this configuration, by surrounding at least one of the positive electrode tab and the negative electrode tab by the housing, it is possible to prevent tabs that are not proper connection targets from being short-circuited in the state before the battery cells are stacked and in the step of stacking the battery cells.
(3) In (2), preferably, the housing includes: a positive electrode cap that accommodates only the positive electrode tab; and a negative electrode cap that is a separate component from the positive electrode cap and accommodates only the negative electrode tab. With this configuration, the workability of the stacking step is improved by attaching the positive electrode cap to the positive electrode tab and attaching the negative electrode cap to the negative electrode tab in advance before the battery cells are stacked.
(4) In (3), preferably, in a state where the positive electrode cap and the negative electrode cap are stacked, the conductive member is disposed so as to be sandwiched between the positive electrode tab and the negative electrode tab, and the positive electrode tab, the negative electrode tab, and the conductive member are fixed by fastening a bolt and a fastening member that includes a female screw. With this configuration, contact reliability among the positive electrode tab, the conductive member, and the negative electrode tab is enhanced.
(5) In (1) or (2) the housing is a single component that accommodates the positive electrode tab, the negative electrode tab, and the conductive member; an accommodation space that accommodates the positive electrode tab, the negative electrode tab, and the conductive member so as to be aligned in the stacking direction is formed in the housing; the partition wall is arranged only at one end of two ends of the housing in the stacking direction; and at the other end of the two ends of the housing in the stacking direction, an opening that communicates with the accommodation space is formed. With this configuration, the number of components of the housing can be reduced.
(6) A secondary battery according to a second disclosure is a secondary battery that includes: multiple battery cells each having a flat shape and stacked in a state where a positive electrode tab and a negative electrode tab are protruding from an outer peripheral edge thereof; and a connector configured to connect in series the positive electrode tab and the negative electrode tab adjacent to each other in a stacking direction of the battery cells. The connector includes a housing that accommodates accommodates the positive electrode tab and the negative electrode tab that are connection targets, and a conductive member that contacts the positive electrode tab and the negative electrode tab in a state of being accommodated in the housing. The housing includes an insulating partition wall that partitions the housing from another said housing that is adjacent in the stacking direction. With this configuration, the positive electrode tab and the negative electrode tab are connected in series via the conductive member in one housing. Since the insulating partition wall is interposed between two housings adjacent in the stacking direction, it is possible to prevent the positive electrode tab and the negative electrode tab from contacting a tab that differs from a proper connection target.
(7) In (6), preferably, the secondary battery includes multiple plate-shaped support members on which the battery cells are placed one by one and that are stacked alternately with the multiple battery cells, and the support member and the housing are formed with detachment preventers that are fitted to each other to prevent the housing from being detached from the support member. With this configuration, it is possible to prevent the housing from being detached from the positive electrode tab or the negative electrode tab.
(8) In (7), preferably, the support member has a function of cooling the battery cell. With this configuration, the number of components can be reduced compared to a case where a device for cooling the battery cell is provided separately from the support member.
(9) In (7) or (8), preferably, the support members include a first support member and a second support member; the first support member is formed with a first female screw hole and a first fastening hole; the second support member is formed with a second fastening hole adjacent to the first female screw hole in the stacking direction and a second female screw hole adjacent to the first fastening hole in the stacking direction; a first bolt inserted into the second fastening hole is screwed into the first female screw hole; and a second bolt inserted into the first fastening hole is screwed into the second female screw hole. With this configuration, the support members adjacent to each other in the stacking direction can be reliably fixed in the stacked state.
(10) In (7) or (8), preferably, the multiple support members are formed with through holes, and the multiple support members are fixed in a stacked state by a long bolt inserted into the through holes and a nut screwed onto the long bolt. With this configuration, the number of components for fixing the support members can be reduced.

### First Embodiment

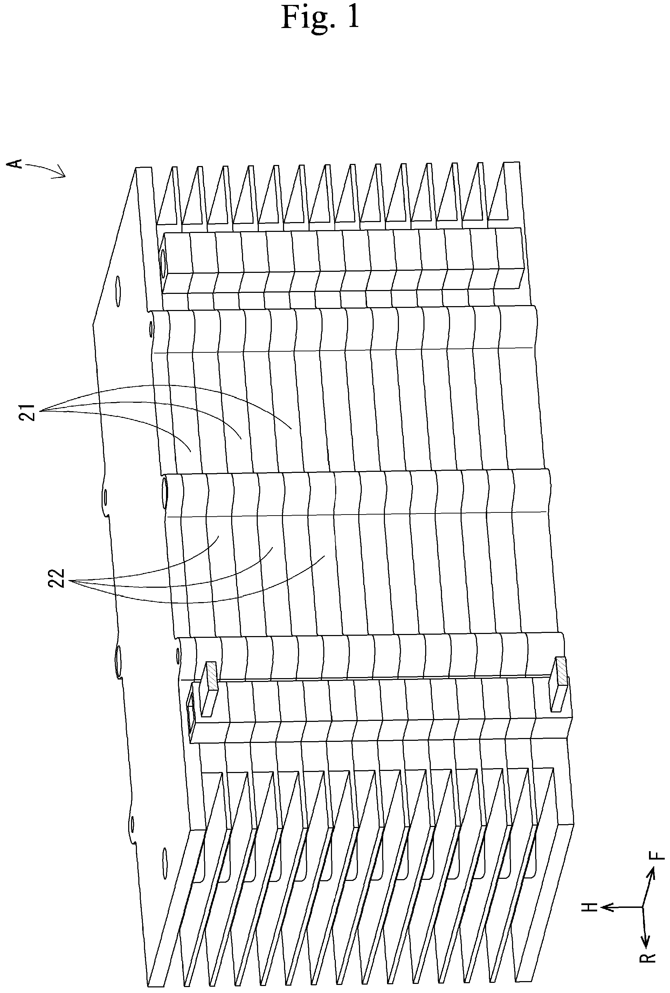

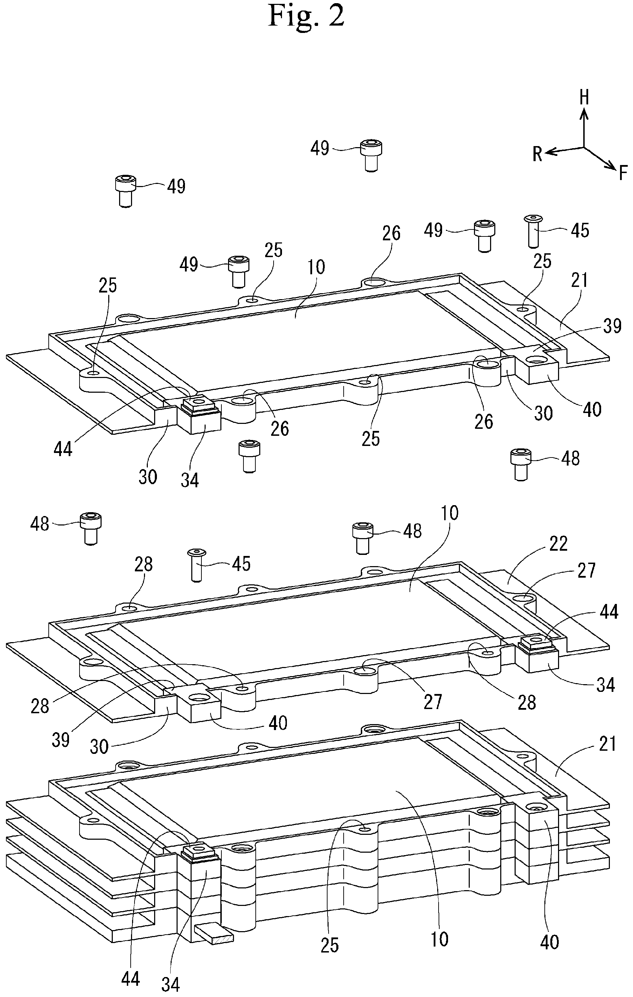

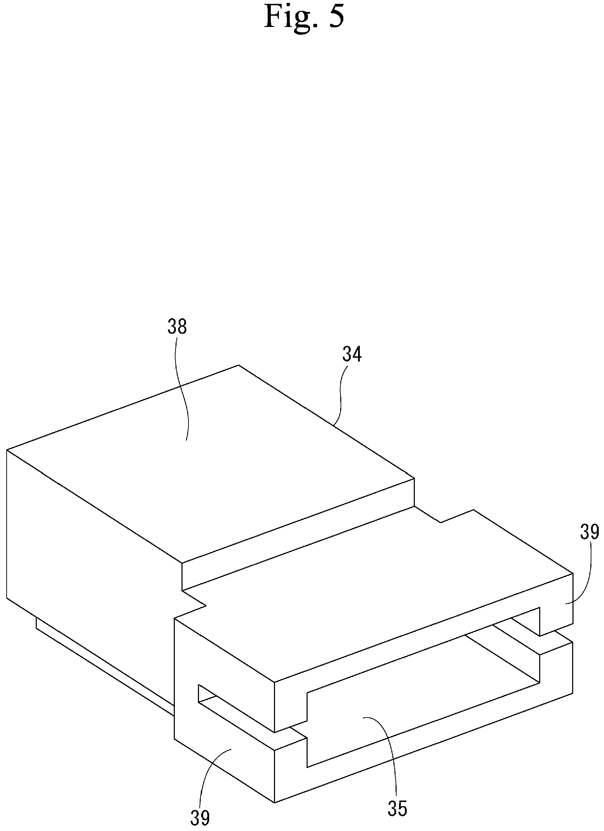

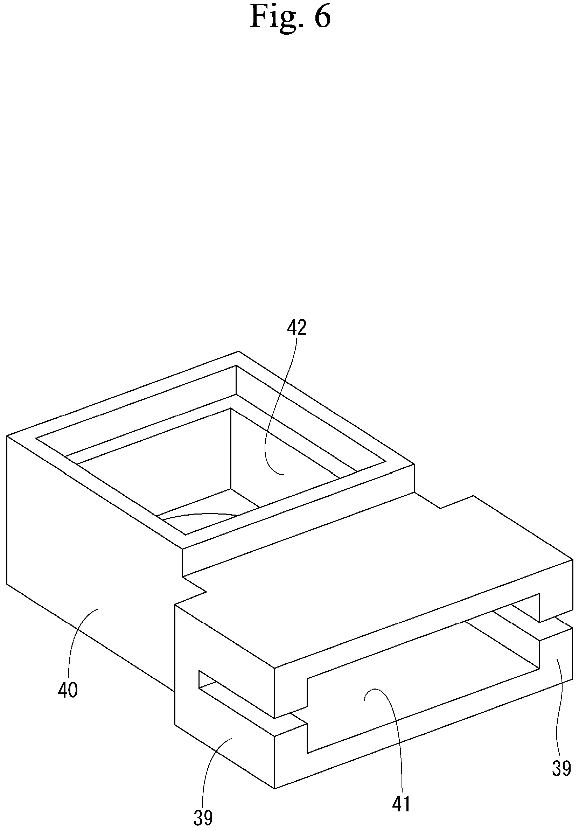

A first embodiment, which embodies the present disclosure, will be described with reference to Figs. 1 to 7. It should be noted that the present invention is not limited to these examples, but is indicated by the claims, and is intended to include all modifications within the scope of the appended claims. In the first embodiment, for the front-rear direction, the F direction in Figs. 1 to 4 is defined as the front. For the vertical direction, the H direction in Figs. 1 to 4 is defined as upward. For the left-right direction, the R direction in Figs. 1 to 4 is defined as the right. The stacking direction of battery cells 10 and the vertical direction are used synonymously.

The secondary battery A of the first embodiment includes multiple battery cells 10, multiple support members 21, 22 made of an insulating material, and multiple connectors 32. The battery cell 10 has a flat shape with a laminated electrode body 12 accommodated in an outer case 11. The laminated electrode body 12 is a member of a known shape in which a positive electrode plate (not illustrated), a negative electrode plate (not illustrated), and a separator (not illustrated) are laminated. The multiple battery cells 10 are stacked in the vertical direction in the state of being placed on the first support member 21 or the second support member 22, which will be described later.

A positive electrode tab 13 which is connected to multiple positive electrode plates and a negative electrode tab 14 connected to multiple negative electrode plates protrude from the front edge of the outer peripheral edge of the outer case 11. The positive electrode tab 13 and the negative electrode tab 14 are disposed at intervals in the left-right direction. The positive electrode tab 13 is formed with a connection hole 13H penetrating the positive electrode tab 13 in the vertical direction. The negative electrode tab 14 is also formed with a connection hole 14H penetrating the negative electrode tab 14 in the vertical direction.

The multiple battery cells 10 are arranged such that battery cells 10, oriented with the positive electrode tab 13 positioned on the right side and the negative electrode tab 14 positioned on the left side, and battery cells 10, oriented with the negative electrode tab 14 positioned on the right side and the positive electrode tab 13 positioned on the left side, are alternately stacked. On each of the right end side and the left end side of the secondary battery A, the positive electrode tabs 13 and the negative electrode tabs 14 are alternately arranged in the stacking direction. The positive electrode tab 13 of one battery cell 10 is connected to the negative electrode tab 14 of the battery cell 10 disposed on its upper side. The negative electrode tab 14 of one battery cell 10 is connected to the positive electrode tab 13 of the battery cell 10 disposed on its lower side.

The multiple support members 21, 22 include multiple plate-shaped first support members 21 and multiple plate-shaped second support members 22. Each of the first support member 21 and the second support member 22 includes a plate-shaped placement portion 23 and a peripheral wall 24 which rises upward from the outer peripheral edge or the vicinity of the outer peripheral edge of the plate-shaped placement portion 23. The plate-shaped placement portion 23 has a function as a cooling member provided with a refrigerant flow path (not illustrated) therein.

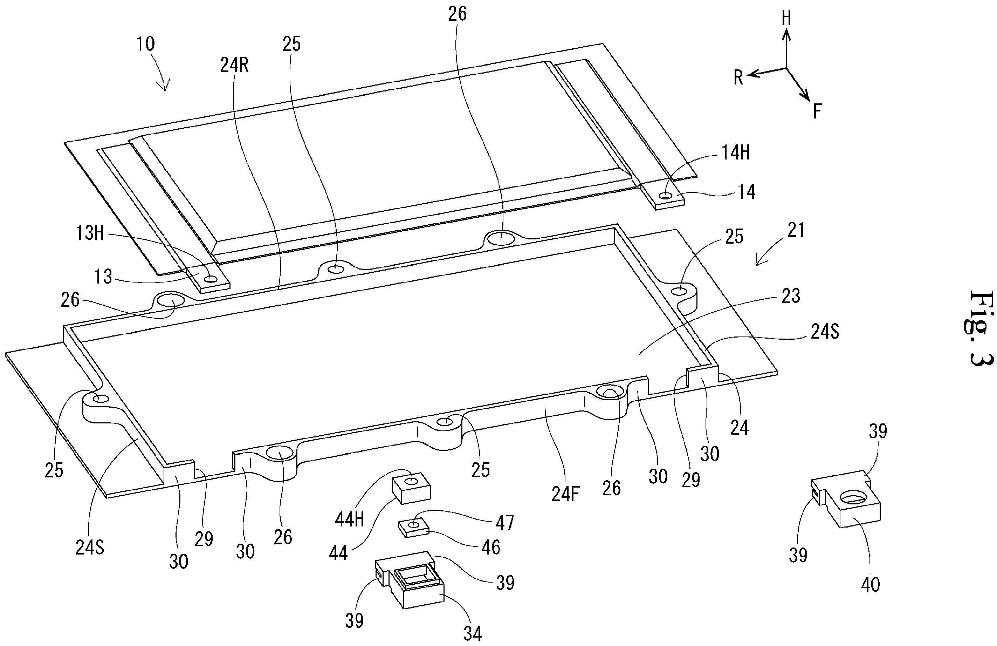

As illustrated in Fig. 3, each of a front wall 24F and a rear wall 24R of the peripheral wall 24 of the first support member 21 is formed with one first female screw hole 25 and a pair of first fastening holes 26. The first female screw hole 25 is disposed at the center in the left-right direction of each of the front wall 24F and the rear wall 24R. The pair of first fastening holes 26 is disposed near both the left and right ends of each of the front wall 24F and the rear wall 24R. In the peripheral wall 24 of the first support member 21, left and right side walls 24S are each formed with one first female screw hole 25.

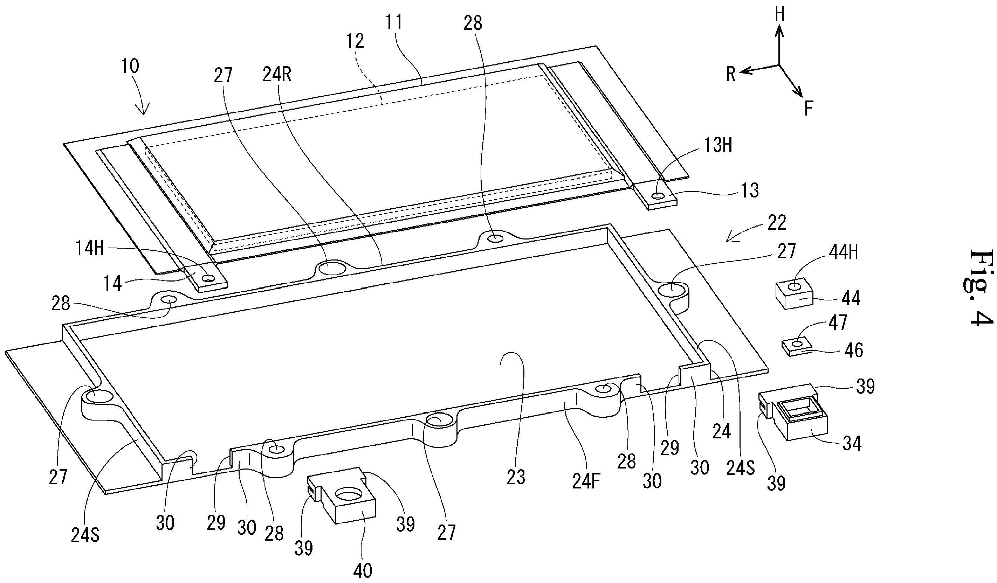

As illustrated in Fig. 4, each of the front wall 24F and the rear wall 24R of the peripheral wall 24 of the second support member 22 is formed with one second fastening hole 27 and a pair of second female screw holes 28. The second fastening hole 27 is disposed at the center in the left-right direction of each of the front wall 24F and the rear wall 24R. The pair of second female screw holes 28 is disposed near both the left and right ends of each of the front wall 24F and the rear wall 24R. In the peripheral wall 24 of the second support member 22, left and right side walls 24S are each formed with one second fastening hole 27.

At each of the left and right ends of the front wall 24F of the first support member 21 and the second support member 22, a cutout 29 in the shape formed by partially cutting out the front wall 24F is formed. In the front wall 24F, left and right side edges of the cutout 29 are each defined as a cutout edge 30.

The connector 32 is a member that connects the positive electrode tab 13 and the negative electrode tab 14 adjacent to each other in the stacking direction of the battery cells 10 in a conductive manner. One connector 32 includes one housing 33 made of insulating material, one conductive member 44, a bolt 45, and a nut 46 (fastening member) including a female screw 47. One housing 33 is constituted by vertically stacking one positive electrode cap 34 and one negative electrode cap 40.

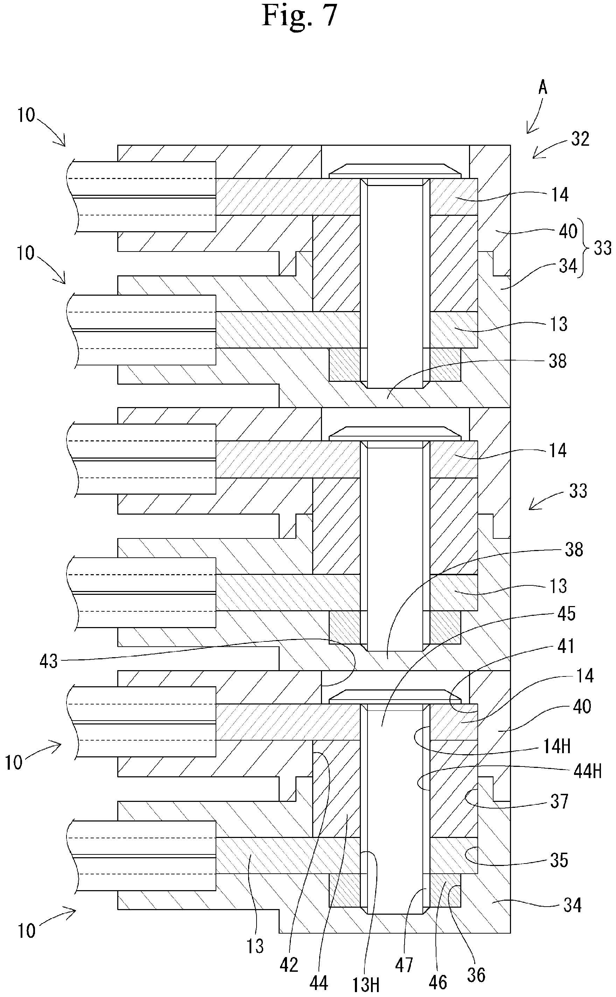

As illustrated in Fig. 7, the positive electrode cap 34 includes a positive electrode accommodation chamber 35 for accommodating the positive electrode tab 13, a nut accommodation chamber 36 formed below the positive electrode accommodation chamber 35, and a lower conduction accommodation chamber 37 formed above the positive electrode accommodation chamber 35. The positive electrode accommodation chamber 35 is open to the rear end surface of the positive electrode cap 34 and communicates with the nut accommodation chamber 36 and the lower conduction accommodation chamber 37. The lower conduction accommodation chamber 37 is open to the upper surface of the positive electrode cap 34. The bottom wall of the positive electrode cap 34 functions as a partition wall 38 which electrically insulates the space inside the positive electrode cap 34 from the space outside below the positive electrode cap 34. The rear end of the positive electrode cap 34 is formed with protrusions 39 protruding to both the left and right sides.

As illustrated in Fig. 7, the negative electrode cap 40 includes a negative electrode accommodation chamber 41 for accommodating the negative electrode tab 14, an upper conduction accommodation chamber 42 formed below the negative electrode accommodation chamber 41, and a bolt accommodation chamber 43 formed above the negative electrode accommodation chamber. The negative electrode accommodation chamber 41 is open to the rear end surface of the negative electrode cap 40 and communicates with the bolt accommodation chamber 43 and the upper conduction accommodation chamber 42. The upper conduction accommodation chamber 42 is open to the lower surface of the negative electrode cap 40. Similarly to the positive electrode cap 34, the rear end of the negative electrode cap 40 is also formed with protrusions 39 protruding to both the left and right sides.

The conductive member 44 is accommodated in the lower conduction accommodation chamber 37 of the positive electrode cap 34 and the upper conduction accommodation chamber 42 of the negative electrode cap 40. The conductive member 44 is formed with a connection hole 44H penetrating the conductive member 44 in the vertical direction.

Next, an assembly step for the secondary battery A according to the first embodiment will be described. First, the nut 46 is accommodated in the nut accommodation chamber 36 from above the positive electrode cap 34. Then, the positive electrode tab 13 is inserted into the positive electrode accommodation chamber 35 from the rear of the positive electrode cap 34, and a conductive portion is accommodated in a conduction accommodation chamber from above the positive electrode cap 34. Before or after this, or at the same time, the negative electrode tab 14 is inserted into the negative electrode accommodation chamber 41 from the rear of the negative electrode cap 40.

Thereafter, the battery cell 10, to which the positive electrode cap 34 and the negative electrode cap 40 are attached, is attached to the first support member 21 or the second support member 22. At the time of attachment, the battery cell 10 is accommodated in the peripheral wall 24 and placed on the plate-shaped placement portion 23. The positive electrode cap 34 and the negative electrode cap 40 are caused to protrude from the cutout 29 to the front (outside) of the peripheral wall 24, and the protrusions 39 are hooked to the cutout edges 30 from the rear (inside) of the peripheral wall 24. By the engagement between the protrusions 39 and the cutout edges 30, the positive electrode cap 34 and the negative electrode cap 40 are held in the state of being assembled to the first support member 21 or the second support member 22.

Thereafter, the first support member 21 to which the battery cell 10, the positive electrode cap 34, and the negative electrode cap 40 are attached and the second support member 22 to which the battery cell 10, the positive electrode cap 34, and the negative electrode cap 40 are attached are alternately stacked. In the state before stacking and in the stacking step, the positive electrode tab 13 is accommodated in the positive electrode cap 34, and the negative electrode tab 14 is accommodated in the negative electrode cap 40. Therefore, there is no possibility of the positive electrode tab 13 being short-circuited with the negative electrode tab 14 that is not a proper connection target, nor is there any possibility of the negative electrode tab 14 being short-circuited with the positive electrode tab 13 that is not a proper connection target.

After the second support member 22 is stacked on the first support member 21, a first bolt 48 is inserted into the second fastening hole 27 from above the second support member 22, and screwed into the first female screw hole 25 to be fastened. This fixes the first support member 21 on the lower side and the second support member 22 on the upper side. After the first support member 21 is stacked on the second support member 22, a second bolt 49 is inserted into the first fastening hole 26 from above the first support member 21, and screwed into the second female screw hole 28 to be fastened. This fixes the second support member 22 on the lower side and the first support member 21 on the upper side.

In the state where the first support member 21 and the second support member 22 are stacked, the negative electrode cap 40 overlaps the upper side of the positive electrode cap 34, and the upper end portion of the conductive member 44 protruding upward from the positive electrode cap 34 is accommodated in the upper conduction accommodation chamber 42. From this state, the bolt 45 is inserted into the connection hole 14H of the negative electrode tab 14 from above the negative electrode cap 40, and passed through the connection hole 44H of the conductive member 44 and the connection hole 13H of the positive electrode tab 13 in this order, and screwed into the female screw 47 of the nut 46 to be fastened. By fastening the bolt 45 and the nut 46, the positive electrode tab 13, the conductive member 44, and the negative electrode tab 14 are fixed with high contact pressure, and the positive electrode tab 13 and the negative electrode tab 14 are connected in a conductive manner via the conductive member 44.

The housing 33 is capable of surrounding both the positive electrode tab 13 and the negative electrode tab 14 in a state where the battery cells 10 are not stacked. With this configuration, by surrounding both the positive electrode tab 13 and the negative electrode tab 14 by the housing 33, it is possible to prevent the tabs 13, 14 that are not the proper connection targets from being short-circuited in the state before the battery cells 10 are stacked and in the step of stacking the battery cells 10.

### Second Embodiment

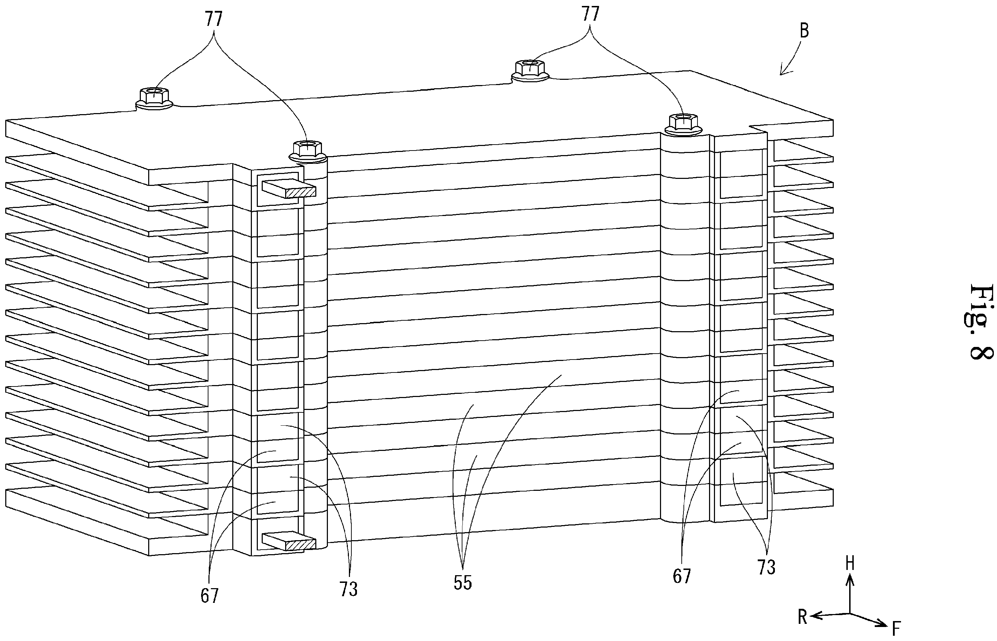

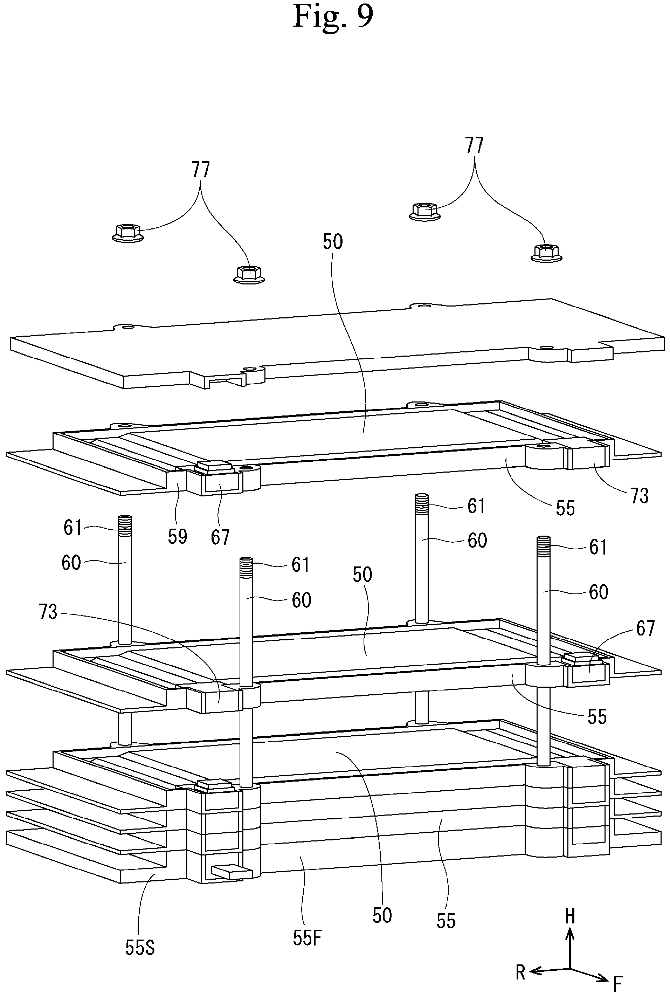

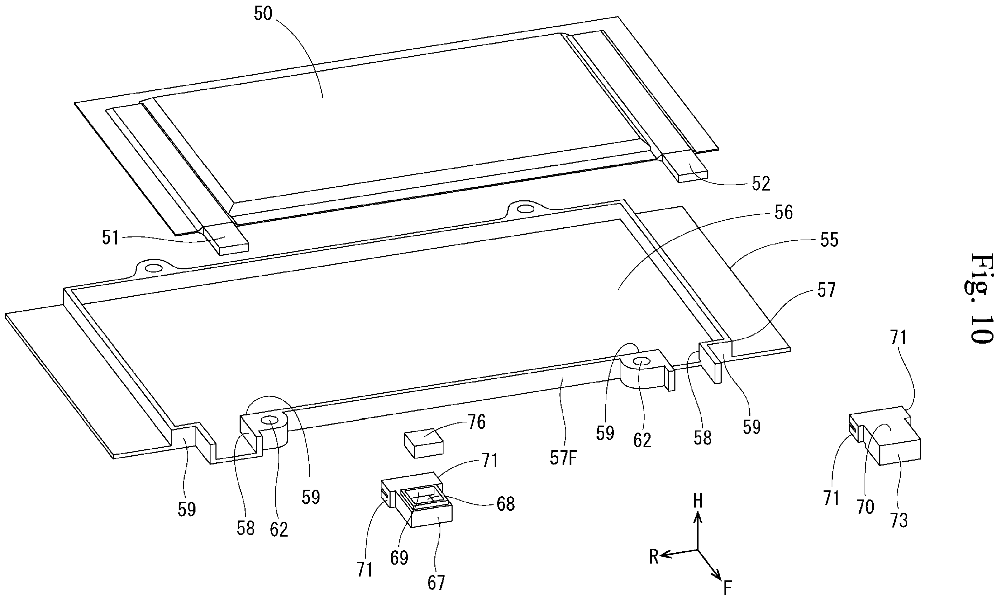

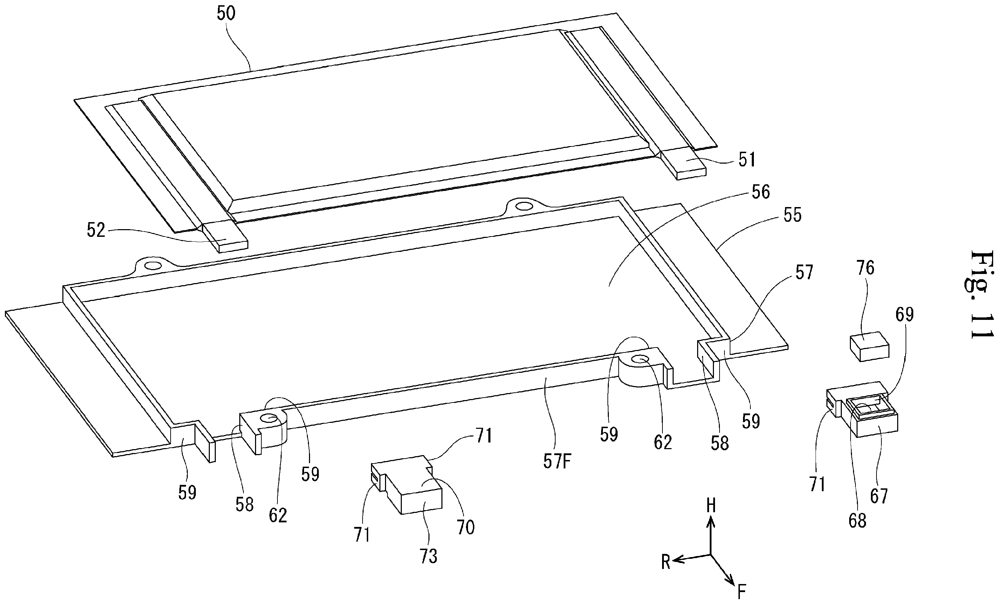

Next, a second embodiment, which embodies the present disclosure, will be described with reference to Figs. 8 to 12. In the second embodiment, for the front-rear direction, the F direction in Figs. 8 to 11 is defined as the front. For the vertical direction, the H direction in Figs. 8 to 11 is defined as upward. For the left-right direction, the R direction in Figs. 8 to 11 is defined as the right. The vertical direction and the stacking direction are used synonymously. In the second embodiment, a positive electrode tab 51, a negative electrode tab 52, and a connector 65 are configured differently from those in the first embodiment. Since the other configurations are the same as those of the first embodiment, the same configurations are denoted by the same reference numerals, and description of the structures, operations, and effects is omitted.

A secondary battery B of the second embodiment includes multiple battery cells 50, multiple support members 55 made of insulating material, and multiple connectors 65. The battery cell 50 of the second embodiment has the same configuration as the battery cell 10 of the first embodiment except for the positive electrode tab 51 and the negative electrode tab 52. The positive electrode tab 51 and the negative electrode tab 52 of the second embodiment do not include a connection hole.

The support member 55 includes a plate-shaped placement portion 56 and a peripheral wall 57 which rises upward from the outer peripheral edge or the vicinity of the outer peripheral edge of the plate-shaped placement portion 56. The plate-shaped placement portion 56 has a function as a cooling member provided with a refrigerant flow path (not illustrated) therein. At each of the left and right ends of the front wall 57F of the support member 55, a cutout 58 in the shape formed by partially cutting out the front wall 57F is formed. In the front wall 57F, left and right side edges of the cutout 58 are each defined as a cutout edge 59.

Among the multiple support members 55, a base support member 55S disposed at the bottom is provided with two pairs of long bolts 60. The two pairs of long bolts 60 are disposed at the left and right ends of the front wall 57F and the rear wall 57R of the peripheral wall 57, and protrude upward parallel to the stacking direction. The upper end of the long bolt 60 is formed with a male screw 61. Among the multiple support members 55, the support members 55 other than the base support member 55S are each formed with two pairs of through holes 62. In a plan view of the secondary battery B viewed from above, the two pairs of through holes 62 are arranged at the same positions as the two pairs of long bolts 60.

The connector 65 is a member that connects the positive electrode tab 51 and the negative electrode tab 52 adjacent to each other in the stacking direction of the battery cells 50 in a conductive manner. One connector 65 includes one housing 66 made of insulating material and one conductive member 76. One housing 66 is constituted by vertically stacking one positive electrode cap 67 and one negative electrode cap 73.

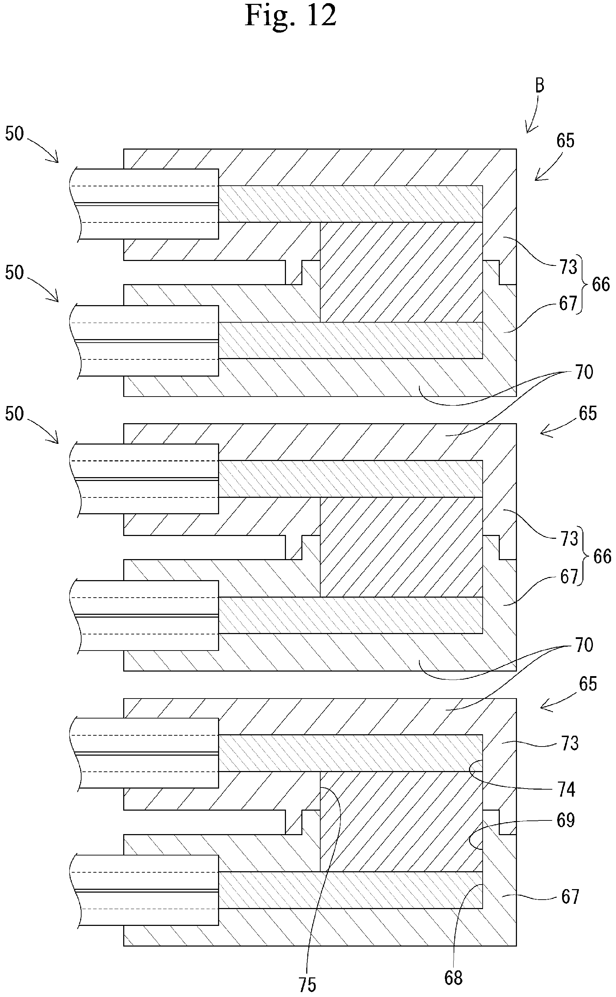

As illustrated in Fig. 12, the positive electrode cap 67 includes a positive electrode accommodation chamber 68 for accommodating the positive electrode tab 51 and a lower conduction accommodation chamber 69. The positive electrode accommodation chamber 68 is open to the rear end surface of the positive electrode cap 67 and communicates with the lower conduction accommodation chamber 69. The lower conduction accommodation chamber 69 is open to the upper surface of the positive electrode cap 67. The bottom wall of the positive electrode cap 67 functions as a partition wall 70 which electrically insulates the space inside the positive electrode cap 67 from the space outside below the positive electrode cap 67. The rear end of the positive electrode cap 67 is formed with protrusions 71 protruding to both the left and right sides.

The negative electrode cap 73 includes a negative electrode accommodation chamber 74 for accommodating the negative electrode tab 52 and an upper conduction accommodation chamber 75 formed below the negative electrode accommodation chamber 74. The negative electrode accommodation chamber 74 is open to the rear end surface of the negative electrode cap 73 and communicates with the upper conduction accommodation chamber 75. The upper conduction accommodation chamber 75 is open to the lower surface of the negative electrode cap 73. The upper wall of the negative electrode cap 73 functions as a partition wall 70 which electrically insulates the space inside the negative electrode cap 73 from the space outside above the negative electrode cap 73. Similarly to the positive electrode cap 67, the rear end of the negative electrode cap 73 is also formed with protrusions 71 protruding to both the left and right sides.

Next, an assembly step for the secondary battery B according to the second embodiment will be described. First, the positive electrode tab 51 is inserted into the positive electrode accommodation chamber 68 from the rear of the positive electrode cap 67, and the conductive member 76 is accommodated in the lower conduction accommodation chamber 69 from above the positive electrode cap 67. Before or after this, or at the same time, the negative electrode tab 52 is inserted into the negative electrode accommodation chamber 74 from the rear of the negative electrode cap 73.

Thereafter, the battery cell 50, to which the positive electrode cap 67 and the negative electrode cap 73 are attached, is attached to the support member 55. At the time of attachment, the battery cell 50 is accommodated in the peripheral wall 57 and placed on the plate-shaped placement portion 56. The positive electrode cap 67 and the negative electrode cap 73 are caused to protrude from the cutout 58 to the front (outside) of the peripheral wall 57, and the protrusions 71 are hooked to the cutout edges 59 from the rear (inside) of the peripheral wall 57. By the engagement between the protrusions 71 and the cutout edges 59, the positive electrode cap 67 and the negative electrode cap 73 are held in the state of being assembled to the support member 55.

Thereafter, the support members 55 other than the base support member 55S are stacked from above. At the time of stacking, the through holes 62 are fitted to the long bolt 60, whereby each of the support members 55 is positioned horizontally with respect to the base support member 55S. Accordingly, the positive electrode cap 67 and the negative electrode cap 73 are positioned in a plan view. In the state where the support members 55 are stacked, the negative electrode cap 73 is assembled so as to overlap the positive electrode cap 67 from above. The long bolt 60 has a positioning function and a guide function of preventing positional displacement of the support member 55 in the horizontal direction when stacking the support members 55.

After all the support members 55 are stacked, a nut 77 is screwed onto the male screw 61 at the upper end of the long bolt 60 and fastened. By fastening the long bolt 60 and the nut 77, the support members 55 are fixed in a stacked state, and the negative electrode caps 73 are assembled in a state of being overlapped on the positive electrode caps 67. By fastening the long bolt 60 and the nut 77, the positive electrode tab 51, the negative electrode tab 52, and the conductive member 76 are fixed with high contact pressure in the housing 66, and the positive electrode tab 51 and the negative electrode tab 52 are connected to each other in a conductive manner via the conductive member 76.

In the secondary battery B of the second embodiment, the through holes 62 are formed in the multiple support members 55 other than the base support member 55S. All the support members 55, including the base support member 55S, are fixed in the stacked state by the long bolt 60 inserted into the through holes 62 and the nuts 77 screwed onto the long bolts 60. With this configuration, the number of components can be reduced compared to a case where only two support members 55 adjacent in the stacking direction are sequentially fixed.

### Third Embodiment

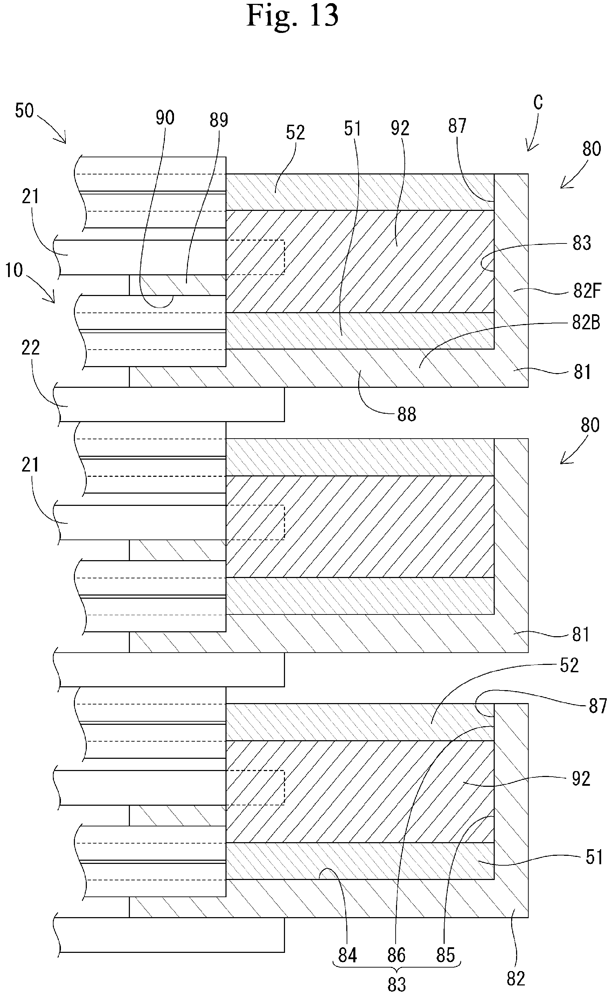

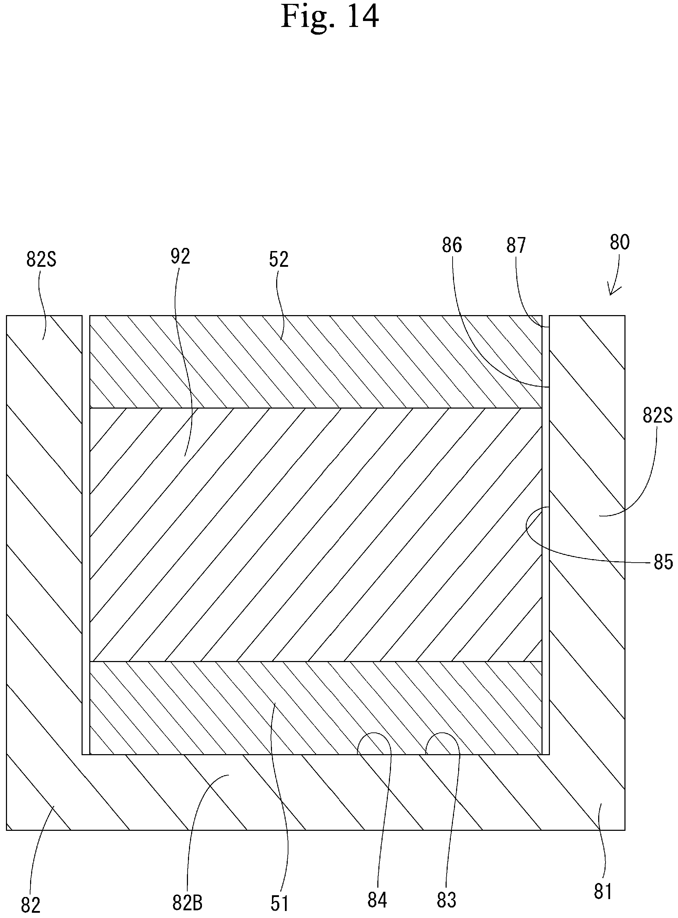

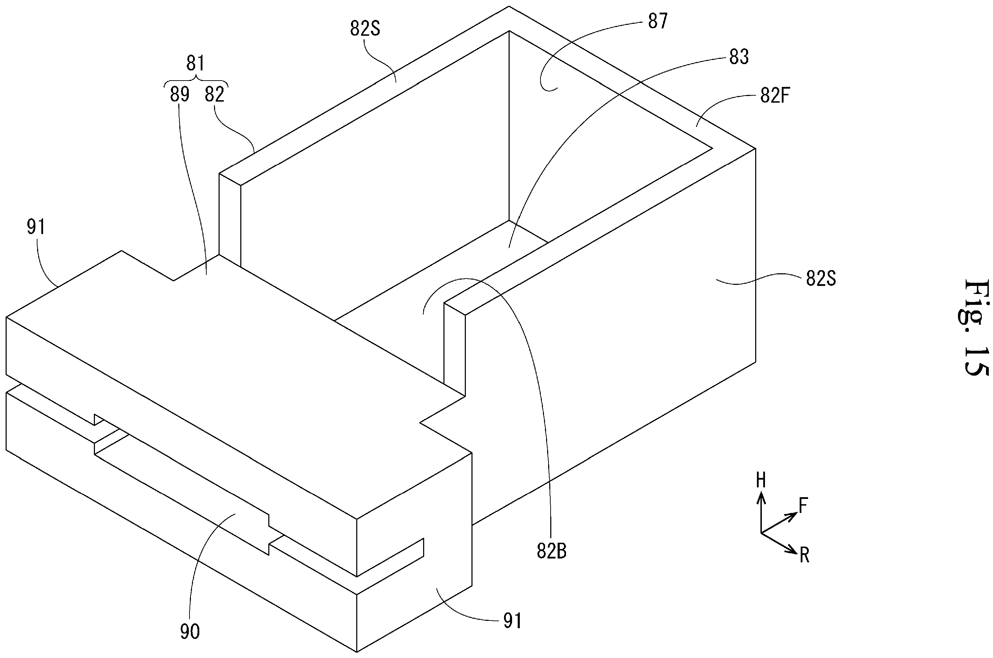

Next, a third embodiment, which embodies the present disclosure, will be described with reference to Figs. 13 to 15. In the third embodiment, for the front-rear direction, the F direction in Fig. 15 is defined as the front. For the vertical direction, the H direction in Fig. 15 is defined as upward. For the left-right direction, the R direction in Fig. 15 is defined as the right. The vertical direction and the stacking direction are used synonymously. In the third embodiment, the battery cell 50 having the same configuration as that of the second embodiment is used, and a connector 80 has a configuration different from that of the second embodiment. Since the other configurations are the same as those of the first embodiment or the second embodiment, the same configurations are denoted by the same reference numerals, and description of the structures, operations, and effects is omitted.

The connector 80 of the third embodiment is a member that connects the positive electrode tab 51 and the negative electrode tab 52 adjacent in the stacking direction of the battery cells 50 in a conductive manner. One connector 80 includes one housing 81 made of insulating material and one conductive member 92. The housing 81 is a single component including a box-shaped accommodation portion 82 and a projection 89 protruding rearward from the rear end of the box-shaped accommodation portion 82. An accommodation space 83 is formed in the box-shaped accommodation portion 82.

The accommodation space 83 is one space constituted by a positive electrode accommodation chamber 84, a conduction accommodation chamber 85, and a negative electrode accommodation chamber 86 in this order from the bottom. An opening 87 which makes the accommodation space 83 open to the outside of the housing 81 is formed on the upper surface of the box-shaped accommodation portion 82. The box-shaped accommodation portion 82 includes a front plate 82F, left and right side plates 82S, and a bottom plate 82B. The bottom plate 82B functions as a partition wall 88 which electrically insulates the inside of the housing 81 (accommodation space 83) from the outside of the housing 81.

The projection 89 closes a lower-end-side region of the rear surface of the box-shaped accommodation portion 82. Specifically, in the vertical direction, the projection 89 closes the entire positive electrode accommodation chamber 84 and the lower-end-side region of the conduction accommodation chamber 85. The upper-end-side region of the conduction accommodation chamber 85 and the entire negative electrode accommodation chamber 86 are open to the outside of the housing 81 in the rear surface of the box-shaped accommodation portion 82. The projection 89 is formed with a slit-shaped insertion hole 90 which allows communication between the inside of the positive electrode accommodation chamber 84 and the space outside behind the housing 81. Both left and right ends of the projection 89 function as a pair of left and right protrusions 91 to be locked to cutout edges 59 (not illustrated) of a support member 55 (not illustrated).

Next, an assembly step for a secondary battery C of the third embodiment will be described. First, in each of all the battery cells 50, the positive electrode tab 51 is inserted into the insertion hole 90 from the rear of the housing 81 and accommodated in the positive electrode accommodation chamber 84, and a conductive portion is accommodated in the conduction accommodation chamber 85 from above the housing 81. Next, the battery cell 50 is attached to the support member, and the protrusions 91 are locked to cutout edges (not illustrated) of the support member. Thereafter, the support members are sequentially stacked.

At this time, the negative electrode tab 52 attached to the upper support member is accommodated into the negative electrode accommodation chamber 86 of the housing 81 attached to the lower support member. By performing the above steps, the process of stacking the support members progresses, and the process of connecting the positive electrode tab 51, the negative electrode tab 52, and the conductive member 92 is completed. In the state before stacking and in the stacking step, since the positive electrode tab 51 is accommodated in the housing 81 made of an insulating material, there is no possibility of the positive electrode tab 51 being short-circuited with the negative electrode tab 52 that is not a proper connection target, nor is there any possibility of the negative electrode tab 52 being short-circuited with the positive electrode tab 51 that is not a proper connection target.

The housing 81 attached to the secondary battery C of the third embodiment is a single component that accommodates the positive electrode tab 51, the negative electrode tab 52, and the conductive member 92. In the housing 81, the accommodation space 83, which accommodates the positive electrode tab 51, the negative electrode tab 52, and the conductive member 92 so as to be aligned in the stacking direction, is formed. The partition wall 88 is arranged only at the lower end (one end) of the two ends of the housing 81 in the stacking direction (vertical direction). At the upper end (the other end) of the two ends of the housing 81 in the stacking direction, the opening 87 communicating with the accommodation space 83 is formed. With this configuration, the number of components of the housing 81 can be reduced.

### Other Examples

The present invention is not limited to the embodiments described with reference to the above description and drawings, and for example, the following examples are also included in the technical scope of the present invention.

In the second and third embodiments, the conductive member is not limited to being sandwiched between the positive electrode tab and the negative electrode tab, but may contact the side surfaces of the positive electrode tab and the negative electrode tab parallel to the stacking direction.

In the second embodiment, the partition wall of the housing may be formed only on one of the upper and lower surfaces of the housing.

In the first and second embodiments, the housing may surround only one of the positive electrode tab and the negative electrode tab in a state where the battery cells are not stacked.

In the first to third embodiments, a device for cooling the battery cell may be provided separately from the support member.

### Reference Signs List

A, B, C secondary battery
10, 50 battery cell
13, 51 positive electrode tab
14, 52 negative electrode tab
21 first support member
22 second support member
25 first female screw hole
26 first fastening hole
27 second fastening hole
28 second female screw
30, 59 cutout edge (detachment preventer)
32, 65, 80 connector
33, 66, 81 housing
34, 67 positive electrode cap
38, 70, 88 partition wall
39,71,91 protrusion (detachment preventer)
40, 73 negative electrode cap
44, 76, 92 conductive member
45 bolt
46, 77 nut (fastening member)
47 female screw
48 first bolt
49 second bolt
55 support member
55S base support member (support member)
60 long bolt
62 through hole
83 accommodation space
87 opening

## Claims

1. A connector (32) for being attached to a secondary battery (A) formed by stacking multiple battery cells (10), each having a flat shape and including a positive electrode tab (13) and a negative electrode tab (14) that are protruding from an outer peripheral edge thereof, the connector (32) being configured to connect in series the positive electrode tab (13) and the negative electrode tab (14) adjacent to each other in a stacking direction of the battery cells (10), the connector (32) comprising:
a housing (33; 66; 81) that is adapted to accommodate the positive electrode tab (13) and the negative electrode tab (14) that are connection targets; and
a conductive member (44) that is adapted to contact the positive electrode tab (13) and the negative electrode tab (14) in a state of being accommodated in the housing (33; 66; 81),
wherein the housing (33; 66; 81) includes an insulating partition wall (88) that partitions the housing (33; 66; 81) from another said housing (33; 66; 81) that is adjacent in the stacking direction,
wherein the housing (33; 66; 81) is a single component that accommodates the positive electrode tab (13), the negative electrode tab (14), and the conductive member (44), and
wherein an accommodation space (83) that accommodates the positive electrode tab (13), the negative electrode tab (14), and the conductive member (44) so as to be aligned in the stacking direction is formed in the housing (33; 66; 81),
**characterized in that**
the partition wall (88) is arranged only at one end of two ends of the housing (33; 66; 81) in the stacking direction, and
at the other end of the two ends of the housing (33; 66; 81) in the stacking direction, an opening (87) that communicates with the accommodation space (83) is formed.

2. The connector (32) according to claim 1, wherein the housing (66; 81) is capable of surrounding at least one of the positive electrode tab (13) and the negative electrode tab (14) in a state where the battery cells (10) are not stacked.

3. The connector (32) according to claim 2, wherein the housing (33) includes:
a positive electrode cap (34) that accommodates only the positive electrode tab (13); and
a negative electrode cap (40) that is a separate component from the positive electrode cap (34) and accommodates only the negative electrode tab (14).

4. The connector (32) according to claim 3,
wherein
in a state where the positive electrode cap (34) and the negative electrode cap (40) are stacked, the conductive member (44) is disposed so as to be sandwiched between the positive electrode tab (13) and the negative electrode tab (14), and
the positive electrode tab (13), the negative electrode tab (14), and the conductive member (44) are fixed by fastening a bolt (60) and a fastening member (77) that includes a female screw.

5. A secondary battery (A) comprising:
multiple battery cells (10) each having a flat shape and stacked in a state where a positive electrode tab (13) and a negative electrode tab (14) are protruding from an outer peripheral edge thereof; and
a connector (32) according to any of claims 1 to 4, the connector (32) being configured to connect in series the positive electrode tab (13) and the negative electrode tab (14) adjacent to each other in a stacking direction of the battery cells (10).

6. The secondary battery (A) according to claim 5, wherein
the secondary battery (A) further comprising multiple plate-shaped support members (21, 22) on which the battery cells (10) are placed one by one and that are stacked alternately with the multiple battery cells (10), and
the support member (21, 22) and the housing (33) are formed with detachment preventers (30) that are fitted to each other to prevent the housing (33) from being detached from the support member (21, 22).

7. The secondary battery (A) according to claim 6, wherein the support member (21, 22) has a function of cooling the battery cell (10).

8. The secondary battery (A) according to claim 6 or 7, wherein
the support members (21, 22) include a first support member (21) and a second support member (22),
the first support member (21) is formed with a first female screw hole (25) and a first fastening hole (26),
the second support member (22) is formed with a second fastening hole (27) adjacent to the first female screw hole (25) in the stacking direction and a second female screw hole (28) adjacent to the first fastening hole (26) in the stacking direction,
a first bolt (48) inserted into the second fastening hole (27) is screwed into the first female screw hole (25), and
a second bolt (49) inserted into the first fastening hole (26) is screwed into the second female screw hole (28).

9. The secondary battery (A) according to claim 6 or 7, wherein
the multiple support members (21, 22) are formed with through holes (62), and
the multiple support members (21, 22) are fixed in a stacked state by a long bolt (60) inserted into the through holes (62) and a nut (77) screwed onto the long bolt (60).

## Patentansprüche

1. Verbindungselement (32), das an einer Sekundärbatterie (A) angebracht wird, die durch Stapeln mehrerer Batteriezellen (10) ausgebildet ist, wobei jede eine flache Form hat und einen positiven Elektrodenstreifen (13) und einen negativen Elektrodenstreifen (14) hat, die von einem Außenumfangsrand von ihr vorragen, wobei das Verbindungselement (32) so aufgebaut ist, dass es in Reihe den positiven Elektrodenstreifen (13) und den negativen Elektrodenstreifen (14), die benachbart zueinander in einer Stapelrichtung der Batteriezellen (10) sind, verbindet, wobei das Verbindungselement (32) Folgendes aufweist:
ein Gehäuse (33; 66; 81), das daran angepasst ist, den positiven Elektrodenstreifen (13) und den negativen Elektrodenstreifen (14) unterzubringen, die Verbindungszielobjekte sind; und
ein leitfähiges Element (44), das daran angepasst ist, mit dem positiven Elektrodenstreifen (13) und dem negativen Elektrodenstreifen (14) in einem Zustand in Kontakt zu stehen, bei dem diese in dem Gehäuse (33; 66; 81) untergebracht sind,
wobei das Gehäuse (33; 66; 81) eine isolierende Trennwand (88) umfasst, die das Gehäuse (33; 66; 81) von einem anderen solchen Gehäuse (33; 66; 81) trennt, das benachbart in der Stapelrichtung ist,
wobei das Gehäuse (33; 66; 81) eine einzelne Komponente ist, die den positiven Elektrodenstreifen (13), den negativen Elektrodenstreifen (14) und das leitfähige Element (44) unterbringt, und
wobei ein Unterbringraum (83), der den positiven Elektrodenstreifen (13), den negativen Elektrodenstreifen (14) und das leitfähige Element (44) so unterbringt, dass sie in der Stapelrichtung ausgerichtet sind, in dem Gehäuse (33; 66; 81) ausgebildet ist,
**dadurch gekennzeichnet, dass**
die Trennwand (88) lediglich an einem Ende der beiden Enden des Gehäuses (33; 66; 81) in der Stapelrichtung angeordnet ist, und
an dem anderen Ende der beiden Enden des Gehäuses (33; 66; 81) in der Stapelrichtung eine Öffnung (87) ausgebildet ist, die mit dem Unterbringraum (83) in Kommunikation steht.

2. Verbindungselement (32) gemäß Anspruch 1, wobei das Gehäuse (66; 81) dazu in der Lage ist, zumindest entweder den positiven Elektrodenstreifen (13) und/oder den negativen Elektrodenstreifen (14) in einem Zustand zu umgeben, bei dem die Batteriezellen (10) nicht gestapelt sind.

3. Verbindungselement (32) gemäß Anspruch 2, wobei das Gehäuse (33) Folgendes umfasst:
eine positive Elektrodenabdeckung (34), die lediglich den positiven Elektrodenstreifen (13) unterbringt; und
eine negative Elektrodenabdeckung (40), die eine von der positiven Elektrodenabdeckung (34) separate Komponente ist und lediglich den negativen Elektrodenstreifen (14) unterbringt.

4. Verbindungselement (32) gemäß Anspruch 3, wobei
in einem Zustand, bei dem die positive Elektrodenabdeckung (34) und die negative Elektrodenabdeckung (40) gestapelt sind, das leitfähige Element (44) so angeordnet ist, dass es zwischen dem positiven Elektrodenstreifen (13) und dem negativen Elektrodenstreifen (14) sandwichartig angeordnet ist, und
der positive Elektrodenstreifen (13), der negative Elektrodenstreifen (14) und das leitfähige Element (44) fixiert sind durch Befestigen einer Schraube (60) und eines Befestigungselementes (77), das ein Innengewinde hat.

5. Sekundärbatterie (A) mit:
mehreren Batteriezellen (10), die jeweils eine flache Form haben und in einem Zustand gestapelt sind, bei dem ein positiver Elektrodenstreifen (13) und ein negativer Elektrodenstreifen (14) von einem Außenumfangsrand von ihnen vorragen; und
einem Verbindungselement (32) gemäß einem der Ansprüche 1 bis 4, wobei das Verbindungselement (32) so aufgebaut ist, dass es in Reihe den positiven Elektrodenstreifen (13) und den negativen Elektrodenstreifen (14), die benachbart zueinander in der Stapelrichtung der Batteriezellen (10) sind, verbindet.

6. Sekundärbatterie (A) gemäß Anspruch 5, wobei
die Sekundärbatterie (A) des Weiteren mehrere plattenförmige Stützelemente (21, 22) aufweist, an denen die Batteriezellen (10) einzeln angeordnet sind und die abwechselnd mit den mehreren Batteriezellen (10) gestapelt sind, und
das Stützelement (21, 22) und das Gehäuse (33) mit Ablöseverhinderungselementen (30) ausgebildet sind, die aneinandergesetzt sind, um zu verhindern, dass das Gehäuse (33) von dem Stützelement (21, 22) abgelöst wird.

7. Sekundärbatterie (A) gemäß Anspruch 6, wobei das Stützelement (21, 22) eine Funktion zum Kühlen der Batteriezelle (10) hat.

8. Sekundärbatterie (A) gemäß Anspruch 6 oder 7, wobei
die Stützelemente (21, 22) ein erstes Stützelement (21) und ein zweites Stützelement (22) umfassen,
das erste Stützelement (21) mit einem ersten Innengewindeloch (25) und einem ersten Befestigungsloch (26) ausgebildet ist,
das zweite Stützelement (22) mit einem zweiten Befestigungsloch (27), das benachbart zu dem ersten Innengewindeloch (25) in der Stapelrichtung ist, und einem zweiten Innengewindeloch (28) ausgebildet ist, das zu dem ersten Befestigungsloch (26) in der Stapelrichtung benachbart ist,
eine erste Schraube (48), die in das zweite Befestigungsloch (27) eingeführt ist, in das erste Innengewindeloch (25) geschraubt ist, und
eine zweite Schraube (49), die in das erste Befestigungsloch (26) eingeführt ist, in das zweite Innengewindeloch (28) geschraubt ist.

9. Sekundärbatterie (A) gemäß Anspruch 6 oder 7, wobei
die vielen Stützelemente (21, 22) mit Durchgangslöchern (62) ausgebildet sind, und
die vielen Stützelemente (21, 22) in einem gestapelten Zustand durch eine lange Schraube (60), die in die Durchgangslöcher (62) eingeführt ist, und eine Mutter (77), die auf die lange Schraube (60) geschraubt ist, fixiert sind.

## Revendications

1. Connecteur (32) destiné à être attaché à une batterie secondaire (A) formée en empilant de multiples cellules de batterie (10), chacune ayant une forme plate et incluant une languette d'électrode positive (13) et une languette d'électrode négative (14) qui sont en saillie à partir d'un bord périphérique extérieur de celle-ci, le connecteur (32) étant configuré pour connecter en série la languette d'électrode positive (13) et la languette d'électrode négative (14) de façon adjacente l'une à l'autre dans une direction d'empilage des cellules de batterie (10), le connecteur (32) comprenant :
un boîtier (33 ; 66 ; 81) qui est adapté pour loger la languette d'électrode positive (13) et la languette d'électrode négative (14) qui sont des cibles de connexion ; et
un élément conducteur (44) qui est adapté pour entrer en contact avec la languette d'électrode positive (13) et la languette d'électrode négative (14) dans un état consistant à être logé dans le boîtier (33 ; 66 ; 81),
dans lequel le boîtier (33 ; 66 ; 81) inclut une cloison de séparation isolante (88) qui sépare le boîtier (33 ; 66 ; 81) d'un autre dit boîtier (33 ; 66 ; 81) qui est adjacent dans la direction d'empilage,
dans lequel le boîtier (33 ; 66 ; 81) est un seul composant qui loge la languette d'électrode positive (13), la languette d'électrode négative (14), et l'élément conducteur (44), et
dans lequel un espace de logement (83) qui loge la languette d'électrode positive (13), la languette d'électrode négative (14), et l'élément conducteur (44) afin d'être alignés dans la direction d'empilage est formé dans le boîtier (33 ; 66 ; 81),
**caractérisé en ce que**
la cloison de séparation (88) est agencée seulement à une extrémité de deux extrémités du boîtier (33 ; 66 ; 81) dans la direction d'empilage, et
à l'autre extrémité des deux extrémités du boîtier (33 ; 66 ; 81) dans la direction d'empilage, une ouverture (87) qui communique avec l'espace de logement (83) est formée.

2. Connecteur (32) selon la revendication 1, dans lequel le boîtier (66 ; 81) est capable d'entourer au moins une de la languette d'électrode positive (13) et de la languette d'électrode négative (14) dans un état où les cellules de batterie (10) ne sont pas empilées.

3. Connecteur (32) selon la revendication 2, dans lequel le boîtier (33) inclut :
une coiffe d'électrode positive (34) qui loge seulement la languette d'électrode positive (13) ; et
une coiffe d'électrode négative (40) qui est un composant distinct de la coiffe d'électrode positive (34) et loge seulement la languette d'électrode négative (14).

4. Connecteur (32) selon la revendication 3,
dans lequel
dans un état où la coiffe d'électrode positive (34) et la coiffe d'électrode négative (40) sont empilées, l'élément conducteur (44) est disposé afin d'être pris en sandwich entre la languette d'électrode positive (13) et la languette d'électrode négative (14), et
la languette d'électrode positive (13), la languette d'électrode négative (14), et l'élément conducteur (44) sont assujettis en fixant un boulon (60) et un élément de fixation (77) qui inclut une vis femelle.

5. Batterie secondaire (A), comprenant :
de multiples cellules de batterie (10) chacune ayant une forme plate et empilées dans un état où une languette d'électrode positive (13) et une languette d'électrode négative (14) sont en saillie à partir d'un bord périphérique extérieur de celle-ci ; et
un connecteur (32) selon de quelconques des revendications 1 à 4, le connecteur (32) étant configuré pour connecter en série la languette d'électrode positive (13) et la languette d'électrode négative (14) de façon adjacente l'une à l'autre dans une direction d'empilage des cellules de batterie (10).

6. Batterie secondaire (A) selon la revendication 5, dans laquelle
la batterie secondaire (A) comprend en outre de multiples éléments de support en forme de plaque (21, 22) sur lesquels les cellules de batterie (10) sont placées une par une et qui sont empilées de façon alternée avec les multiples cellules de batterie (10), et
l'élément de support (21, 22) et le boîtier (33) sont formés avec des organes de prévention de détachement (30) qui sont ajustés les uns sur les autres pour empêcher le boîtier (33) d'être détaché de l'élément de support (21, 22).

7. Batterie secondaire (A) selon la revendication 6, dans laquelle l'élément de support (21, 22) a une fonction de refroidissement de la cellule de batterie (10).

8. Batterie secondaire (A) selon la revendication 6 ou 7, dans laquelle les éléments de support (21, 22) incluent un premier élément de support (21) et un second élément de support (22),
le premier élément de support (21) est formé avec un premier trou de vis femelle (25) et un premier trou de fixation (26),
le second élément de support (22) est formé avec un second trou de fixation (27) adjacent au premier trou de vis femelle (25) dans la direction d'empilage et un second trou de vis femelle (28) adjacent au premier trou de fixation (26) dans la direction d'empilage,
un premier boulon (48) inséré dedans le second trou de fixation (27) est vissé dedans le premier trou de vis femelle (25), et
un second boulon (49) inséré dedans le premier trou de fixation (26) est vissé dedans le second trou de vis femelle (28).

9. Batterie secondaire (A) selon la revendication 6 ou 7, dans laquelle les multiples éléments de support (21, 22) sont formés avec des trous traversants (62), et
les multiples éléments de support (21, 22) sont assujettis en un état empilé par un long boulon (60) inséré dedans les trous traversants (62) et un écrou (77) vissé sur le long boulon (60).
